# DEMANDE DE BREVET EUROPEEN

(11) **EP 1 234 743 A1**
(43) Date de publication de la demande: **28.08.2002**
(21) Numéro de dépôt: 02290467.6
(22) Date de dépôt: 26.02.2002
(51) Int. Cl.: B62D 1/10

(54) **Ensemble de colonne de direction - coussin central fixe et véhicule automobile correspondant**

(30) Priorité: 27.02.2001 FR 0102669
(71) Demandeur: Faurecia Industries, 92100 Boulogne (FR)
(72) Inventeur: Hoblingre, André, 90380 Roppe (FR)
(74) Mandataire: Jacobson, Claude

(57) **Abrégé**

Cet ensemble pour véhicule automobile comprend un arbre de direction s'étendant suivant une direction longitudinale (X-X) et comprenant un tronçon avant (4) et un tronçon arrière (6), un mécanisme à engrenages (19) pour transmettre au tronçon avant (4) un mouvement de rotation du tronçon arrière (6) produit par un volant de direction (12), un bloc fixe (16) de montage d'un coussin central (64) pour le maintenir fixe en rotation lorsque l'arbre de direction tourne, le mécanisme à engrenages comprenant un organe denté avant (28) lié au tronçon avant (4) d'arbre de direction, un organe denté arrière (22) lié au tronçon arrière (6) d'arbre de direction, et un organe denté intermédiaire (24), dont une partie dentée avant (104) engrène avec l'organe denté avant et une partie dentée arrière (106) engrène avec l'organe denté arrière. Les dents (108) de la partie dentée avant (104) de l'organe denté intermédiaire (24) sont décalées angulairement par rapport aux dents (110) de sa partie dentée arrière (106).

## Description

La présente invention concerne un ensemble de colonne de direction pour véhicule automobile, du type comprenant un arbre de direction s'étendant suivant une direction longitudinale et comprenant un tronçon avant et un tronçon arrière, un mécanisme à engrenages pour transmettre au tronçon avant un mouvement de rotation du tronçon arrière produit par un volant de direction, un bloc fixe de montage d'un coussin central pour le maintenir fixe en rotation lorsque l'arbre de direction tourne, le mécanisme à engrenages comprenant un organe denté avant lié au tronçon avant d'arbre de direction, un organe denté arrière lié au tronçon arrière d'arbre de direction, et un organe denté intermédiaire, dont une partie dentée avant engrène avec l'organe denté avant et une partie dentée arrière engrène avec l'organe denté arrière.

Un ensemble de colonne du type précité permet un entraînement en rotation de l'arbre de direction par le volant tout en maintenant fixe le coussin disposé au centre du volant.

Un tel coussin central fixe regroupe en général plusieurs accessoires, parmi lesquels un sac gonflable de sécurité, un commutateur de commande d'avertisseur sonore ainsi que d'autres organes de commande de différents équipements fonctionnels du véhicule.

Un ensemble du type précité est connu par exemple du document FR-2 782 971. Dans ce document, les organes dentés avant et arrière sont des manchons dentés intérieurement, coaxiaux et centrés sur l'axe longitudinal de l'arbre de direction. L'organe denté intermédiaire est un pignon allongé denté extérieurement, qui est disposé à l'intérieur des manchons dentés et qui est excentré par rapport à l'axe longitudinal de l'arbre de direction. Le pignon intermédiaire est monté à rotation dans deux paliers réalisés dans une matière souple caoutchoutée. Ces paliers maintiennent le pignon intermédiaire plaqué contre les manchons dentés avant et arrière et rattrapent ainsi les jeux radiaux qui pourraient apparaître entre ceux-ci.

Dans cet ensemble, les jeux radiaux sont bien rattrapés, mais on constate en pratique que le couple à appliquer sur le volant de direction pour faire tourner l'arbre de direction oscille fortement par rapport à une valeur moyenne. Cette variation, dont la période correspond au pas des dents du pignon intermédiaire est due au fait que les diamètres primitifs des manchons dentés et du pignon intermédiaire ne sont pas tangents, ce qui assurerait un engrènement idéal, mais sont sécants en raison du maintien du pignon intermédiaire contre les manchons.

Cette variation de forte amplitude se traduit par un désagrément de conduite et peut empêcher, par exemple, un conducteur de commander précisément la rotation de l'arbre de direction.

Un but de l'invention est de résoudre ce problème en fournissant un ensemble du type précité dont le couple d'entraînement en rotation de l'arbre de direction a une amplitude de variation réduite.

A cet effet, l'invention a pour objet un ensemble de colonne de direction du type précité, caractérisé en ce que les dents de la partie dentée avant de l'organe denté intermédiaire sont décalées angulairement par rapport aux dents de sa partie dentée arrière.

Selon des modes particuliers de réalisation, l'ensemble peut comprendre l'une ou plusieurs des caractéristiques suivantes, prise(s) isolément ou selon toutes les combinaisons techniquement possibles :
- le plan radial médian de chaque dent de la partie dentée avant est d'une part disposé en regard d'un espace séparant deux dents voisines de la partie dentée arrière, et d'autre part espacé angulairement sensiblement du même angle par rapport aux plans radiaux médians de ces deux dents voisines.
- les parties dentées avant et arrière possèdent chacune le même nombre de dents espacées du même pas, et les dents de la partie dentée avant sont décalées d'un demi-pas par rapport aux dents de la partie dentée arrière,
- l'ensemble de colonne de direction comprend en outre des moyens de maintien radial de l'organe denté intermédiaire contre les dents des organes dentés avant et arrière,
- les moyens de maintien comprennent un organe de rappel élastique de l'organe denté intermédiaire contre les organes dentés avant et arrière,
- les moyens de maintien comprennent un mécanisme à surfaces de rampe pour transformer une composante longitudinale d'une force produite par l'organe de rappel élastique en une force radiale de rappel de l'organe denté intermédiaire contre les organes dentés avant et arrière,
- le mécanisme à surfaces de rampe comprend un support de l'organe denté intermédiaire, lequel support est reçu de manière mobile radialement par rapport au bloc fixe,
- l'organe de rappel élastique est un ressort de compression disposé longitudinalement,
- les organes dentés avant et arrière sont des manchons dentés intérieurement, et en ce que l'organe denté intermédiaire est un pignon denté extérieurement et disposé à l'intérieur des organes dentés avant et arrière.

L'invention a en outre pour objet un véhicule automobile caractérisé en ce qu'il comprend un ensemble tel que défini ci-dessus.

L'invention sera mieux comprise à la lecture de la description qui va suivre, donnée uniquement à titre d'exemple, et faite en se référant aux dessins annexés, sur lesquels :
- la figure 1 est une vue schématique partielle et en coupe longitudinale d'un ensemble de colonne de direction selon l'invention, avec deux parties rectangulaires agrandies ;
- la figure 2 est une vue schématique en bout de l'organe denté intermédiaire de l'ensemble de la figure 1, et
- les figures 3 et 4 sont des courbes, respectivement théorique et pratique, illustrant la variation du couple à appliquer pour entraîner en rotation l'arbre de direction de l'ensemble de la figure 1.

Dans tout ce qui suit les termes « avant » et « arrière » s'entendent par rapport au sens de marche du véhicule automobile et à la position du conducteur.

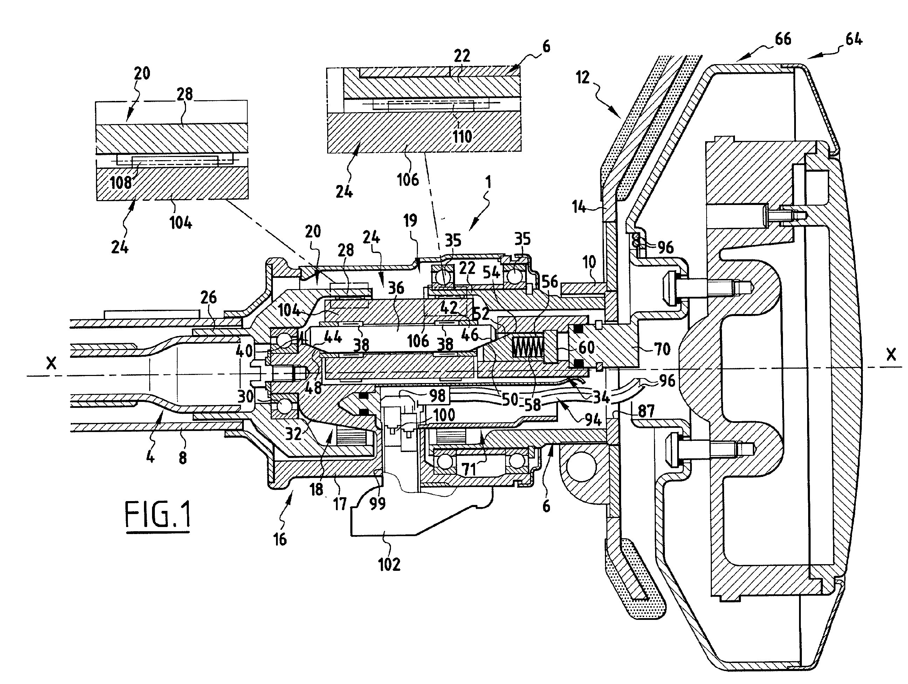

La figure 1 illustre un ensemble de colonne de direction 1 d'un véhicule automobile qui comprend un arbre de direction d'axe longitudinal X-X et dont la structure générale est analogue à celle décrite dans FR-2 782 971.

L'arbre de direction comprend lui-même un tronçon avant 4 (à gauche sur la figure 1) et un tronçon arrière 6.

Le tronçon avant 4, qui peut être par exemple réalisé en plusieurs parties comme représenté sur la figure 1, est reçu de manière connue à rotation dans un corps de colonne de direction 8 porté par la structure du véhicule automobile.

Le tronçon arrière 6 de l'arbre de direction est relié au moyeu 10 d'un volant de direction 12 pour en être solidaire en rotation. Cette liaison est assurée de manière classique, par exemple par blocage radial au moyen d'une vis conique. Le volant 12 comprend une jante annulaire (non représentée) reliée rigidement au moyeu 10 par plusieurs branches 14 réparties angulairement autour de celui-ci.

L'ensemble de colonne de direction 1 comprend en outre un bloc ou corps fixe 16 disposé entre les tronçons avant 4 et arrière 6 de l'arbre de direction. Le corps fixe 16 comprend une enveloppe ou jupe extérieure 17 de forme générale cylindrique d'axe X-X, et un noyau central 18 relié rigidement à la jupe 17. Ce corps 16 est relié rigidement au reste de la structure du véhicule par sa jupe 17 de manière à rester fixe lorsque l'arbre de direction tourne sous l'action du volant de direction 12.

L'ensemble 1 comprend en outre un mécanisme à engrenages 19 pour transmettre un mouvement de rotation du tronçon arrière 6 de l'arbre de direction vers le tronçon avant 4. Ce mécanisme 19 comprend un organe denté avant 20 sous forme d'une cloche, un organe denté arrière 22 et un organe denté intermédiaire 24 sous forme d'un pignon allongé.

L'extrémité avant 26 de la cloche 20 est solidaire en rotation de l'extrémité arrière du tronçon avant 4 de l'arbre de rotation.

L'extrémité arrière 28 de la cloche 20 forme un manchon denté intérieurement. La cloche 20 est centrée sur l'axe X-X et montée à rotation, par exemple par un roulement à billes 30, sur l'extrémité avant 32 du noyau central 18 du corps fixe 16, cette extrémité avant 32 étant reçue à l'intérieur du manchon denté 28 de la cloche 20.

Le tronçon arrière 6 de l'arbre de direction est un manchon entourant l'extrémité arrière 34 du noyau 18 du corps fixe 16 et reçu dans l'extrémité arrière de la jupe 17 du corps fixe 16. Deux roulements à billes 35 sont interposés entre la paroi extérieure du tronçon arrière 6 de l'arbre de direction et la paroi intérieure de la jupe 17, pour permettre au tronçon arrière 6 de tourner autour de l'axe X-X par rapport au corps 16 et de bloquer axialement ce tronçon arrière 6 par rapport au corps fixe 16.

L'organe denté arrière 22 est formé par l'extrémité avant du tronçon arrière 6 de l'arbre de direction qui est dentée intérieurement.

Le pignon intermédiaire 24 s'étend de l'avant vers l'arrière depuis l'intérieur du manchon denté avant 28 jusqu'à l'intérieur du manchon denté arrière 22.

Ce pignon 24 est monté sur le noyau 18 par l'intermédiaire d'une tige de support 36 longitudinale disposée à l'intérieur du pignon intermédiaire 24. Deux roulements à aiguilles 38 sont par exemple interposés entre le pignon 24 et la tige 36. La tige 36 et le pignon 24 peuvent se déplacer radialement par rapport au noyau 18.

Les extrémités avant 40 et arrière 42 de la tige 36 font saillie longitudinalement à l'extérieur du pignon intermédiaire 24. Chacune de ces extrémités présente une première surface de rampe, respectivement 44 et 46. Les deux premières surfaces de rampe 44 et 46 sont inclinées de manière opposée par rapport à l'axe longitudinal X-X, par exemple d'un angle d'environ 20° et plus généralement compris entre 10° et 40°. Ainsi, la première surface de rampe avant 44 est inclinée radialement vers l'extérieur et vers l'avant, et la première surface de rampe arrière 46 est inclinée radialement vers l'extérieur et vers l'arrière.

Les premières surfaces de rampe 44 et 46 prennent appui respectivement sur des deuxièmes surfaces de rampe 48 et 50 inclinées de manière correspondante.

La deuxième surface de rampe avant 48, qui coopère avec la première surface de rampe avant 44 de la tige 36, est ménagée dans l'extrémité avant 32 du noyau 18. La deuxième surface de rampe arrière 50, qui coopère avec la première surface de rampe arrière 46 de la tige 36, est ménagée à l'avant d'un poussoir 52 reçu dans un alésage longitudinal 54 ménagé dans l'extrémité arrière 34 du noyau 18 du corps fixe 16.

Le poussoir 52 peut coulisser axialement dans l'alésage 54. Un orifice axial borgne 56 est ménagé à l'arrière du poussoir 52 et reçoit un ressort hélicoïdal de rappel 58 qui prend appui sur le fond de l'orifice 56 et sur une vis 60 vissée dans l'alésage 54, à l'arrière du poussoir 52. Le ressort 58 rappelle donc le poussoir 52 vers l'avant de l'ensemble de colonne de direction 1.

L'ensemble de colonne de direction 1 comprend en outre, au centre du volant 12, un coussin central fixe 64 qui comprend une coquille de support 66, réalisée par exemple d'une seule pièce en matière plastique chargée de fibres de verre ou en aluminium ou en magnésium. Le coussin central fixe 64 porte notamment un sac gonflable de sécurité (non représenté) et des organes (non représentés) de commande d'équipements fonctionnels du véhicule.

La coquille 66 est prolongée vers l'avant par un pion cylindrique 70 et une fiche ou queue 71 qui s'étendent parallèlement à l'axe X-X.

Le pion 70 a une longueur nettement plus faible que la fiche 71. Le pion 70 et la fiche 71 sont excentrés par rapport à l'axe X-X et sont décalés angulairement d'environ 180° autour de cet axe.

Le pion 70 est reçu, au travers d'un orifice central 87 du moyeu 10, dans l'alésage 54 de l'extrémité arrière 34 du noyau 18 du corps fixe 16, à l'arrière de la vis 60.

La fiche 71 est reçue, au travers de l'orifice central 87 du moyeu 10, dans un évidement longitudinal de forme correspondante du noyau 18 du corps fixe 16.

Le pion 70 et la fiche 71 assurent le centrage radial et le positionnement angulaire relatif du coussin central 64 et du corps fixe 16.

La fiche 71 définit intérieurement un passage axial 94 pour un faisceau de conducteurs électriques 96 issus des différents organes de commande portés par le coussin central fixe 64, et notamment ceux logés dans la coquille 66. Le faisceau de conducteurs 96 est terminé à l'avant par un connecteur femelle 98 orienté radialement vers l'extérieur en regard d'une ouverture de la fiche 71. Cette ouverture débouche dans un passage radial 99 ménagé dans le corps 16 entre le noyau 18 et la jupe 17 du corps fixe 16, Un connecteur mâle 100, complémentaire du connecteur femelle 99, est reçu dans ce passage radial 99 pour relier les conducteurs électriques 96 aux équipements correspondants du véhicule.

De manière classique, ce connecteur mâle 100 est verrouillable en position par un levier pivotant 102 qui, dans sa position de verrouillage représentée sur la figure 1, est plaqué contre la partie inférieure arrière de la jupe 17 du corps fixe 16.

On notera que sur la figure 1, les connecteurs 98 et 100 et le levier 102 n'ont pas été représentés en coupe.

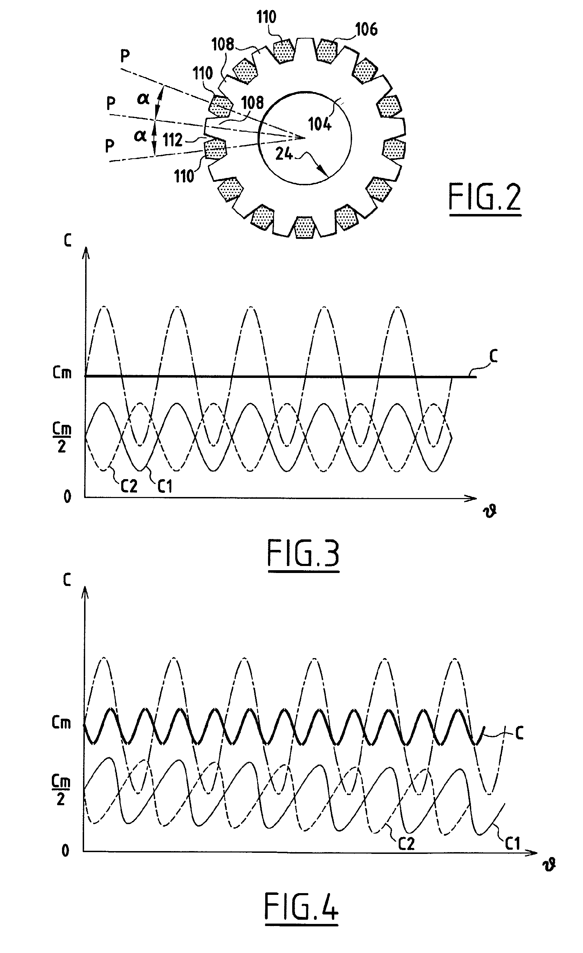

Comme illustré plus particulièrement par les parties agrandies de la figure 1 et par la figure 2, le pignon intermédiaire 24 comprend une partie avant dentée 104 engrénant avec le manchon denté avant 28 et une partie arrière dentée 106 engrénant avec le manchon denté arrière 22. Le pignon intermédiaire 24 est dépourvu de dents entre ses parties avant 104 et arrière 106.

Les parties avant 104 et arrière 106 comprennent le même nombre de dents espacées du même pas. II s'agit de dents rectilignes qui s'étendent parallèlement à l'axe X-X.

Les dents 108 de la partie dentée avant 104 sont décalées angulairement par rapport aux dents 110 de la partie dentée arrière 106 d'un demi-pas.

Ainsi, le plan radial médian P d'une dent avant 108 est disposé longitudinalement en regard d'un espace 112 séparant deux dents arrière 110 voisines. Ce plan P de la dent avant 108 considérée est espacé des plans radiaux médians P des deux dents arrière 110 voisines sensiblement d'un même angle α.

Lorsque le conducteur fait pivoter le volant 12 autour de l'axe X-X, ce dernier entraîne par l'intermédiaire du moyeu 10 le tronçon arrière 6 de l'arbre de direction en rotation autour de l'axe longitudinal X-X. Le manchon denté arrière 22 qui engrène avec le pignon intermédiaire 24 entraîne ce dernier en rotation autour de la tige excentrée 36. Le pignon intermédiaire 24 qui engrène également avec le manchon denté avant 28 entraîne alors ce dernier en rotation. Le manchon 28 étant solidaire en rotation du tronçon avant 4 de l'arbre de direction, le mouvement de rotation du volant 12 est transmis par le mécanisme d'engrenages 19 au tronçon avant 4 de l'arbre de direction.

Les premières surfaces de rampe 44 et 46, les deuxièmes surfaces de rampe 48 et 50 ainsi que le ressort de rappel 58 permettent de rattraper les jeux radiaux entre les dents du pignon intermédiaire 24 et les dents du manchon avant 28 et du manchon arrière 22.

En effet, le ressort 58 exerce une force axiale dirigée vers l'avant sur le poussoir 52. Du fait de l'inclinaison des surfaces de rampe arrière 46 et 50 et des surfaces de rampe avant 44 et 48, cette force longitudinale est transformée en une force radiale de rappel tendant à déplacer le pignon 24 radialement vers l'extérieur et donc à le plaquer contre les manchons dentés avant 28 et arrière 22.

Un léger espacement longitudinal entre l'extrémité arrière du poussoir 52 et la vis 60 permet un léger déplacement vers l'arrière du poussoir 52 et donc un léger déplacement radialement vers l'intérieur du pignon 24, contre l'action du ressort 58. Cette caractéristique permet d'absorber les légers défauts de fabrication du pignon intermédiaire 24 et des manchons dentés avant 28 et arrière 22.

La vis 60 permet de régler l'amplitude de cette possibilité de déplacement radial du pignon 24.

L'utilisation de surfaces de rampe 44, 46, 48 et 50, qui transforment une force longitudinale de rappel en une force radiale de rappel, permet de disposer le ressort 58 longitudinalement dans l'ensemble de colonne de direction 1. Ainsi, l'ensemble 1 possède un encombrement radial réduit tout en permettant un rattrapage satisfaisant des jeux radiaux.

Par ailleurs, les surfaces de rampe 44, 46, 48 et 50 permettent d'utiliser un ressort 58 moins puissant et donc moins encombrant qu'un ressort radial, puisque le ressort axial 58 n'a à compenser que la composante axiale de la force de contact de la tige 36 sur le poussoir 52.

De plus, le mécanisme de maintien radial du pignon 24 contre les dents des manchons avant 28 et arrière 22 est moins sensible au vieillissement qu'un mécanisme utilisant des paliers en matière souple caoutchoutée sur lesquels la tige 36 serait montée.

En outre, le couple nécessaire pour faire pivoter l'arbre de direction 12 autour de l'axe longitudinal X-X varie faiblement comme exposé ci-dessous en regard des figures 3 et 4.

Sur la figure 3, la courbe C1 en trait plein fin représente, en fonction de l'angle de rotation θ, le couple nécessaire pour assurer la transmission du mouvement de rotation entre un premier manchon denté et la partie dentée correspondante du pignon intermédiaire 24. Cette courbe C1 est sensiblement sinusoïdale et oscille autour d'une valeur moyenne Cm/2 avec une période correspondant au pas des dents du pignon intermédiaire 24.

Dans l'état de la technique, les dents du pignon intermédiaire 24 étant alignées, le couple nécessaire pour assurer la transmission du mouvement de rotation entre le pignon intermédiaire et l'autre manchon denté varie également selon la courbe C1. Le couple global d'entraînement en rotation de l'arbre de direction varie donc selon la courbe en trait mixte qui correspond à deux fois la courbe C1. Cette courbe est sensiblement sinusoïdale et oscille autour de la valeur moyenne Cm. L'amplitude de variation du couple global est double de celle de la courbe C1.

Au contraire, dans l'ensemble des figures 1 et 2, la courbe de couple C2 en pointillés correspondant à l'engrènement du pignon denté intermédiaire 24 avec l'autre manchon denté est en opposition de phase avec la courbe C1. Cela est dû au décalage angulaire entre les dents avant 108 et arrière 110 du pignon intermédiaire 24.

Les variations de ces deux courbes C1 et C2 se compensent donc de sorte que le couple global C (en trait plein fort) nécessaire pour entraîner l'arbre de direction en rotation est sensiblement constant et vaut environ Cm.

Il s'agit là du fonctionnement théorique de l'ensemble 1. En pratique, les courbes C1 et C2 ne sont pas sinusoïdales et leurs variations ne se compensent que partiellement de sorte que la courbe de couple global C oscille autour de la valeur Cm, mais son amplitude de variation est nettement réduite par rapport à celle de la courbe en trait mixte correspondant à l'état de la technique. On notera également que la période de ces variations est sensiblement deux fois plus réduite que celle des courbes C1 et C2.

Ainsi, le désagrément de conduite est réduit et l'entraînement en rotation de l'arbre de direction peut être plus précis.

Les principes décrits ci-dessus peuvent être utilisés avec d'autres types de mécanisme à engrenages 19, par exemple ceux comprenant un organe denté intermédiaire sous forme d'un manchon denté intérieurement et des organes dentés avant et arrière sous forme de pignons dentés extérieurement.

Par ailleurs, d'autres types de dents que les dents rectilignes peuvent être utilisées pour le pignon intermédiaire 24 et le décalage angulaire entre les dents avant 108 et arrière 110 n'est pas nécessairement d'un demi-pas.

De manière générale, ces principes peuvent également être appliqués aux ensembles de colonne de direction ne comprenant pas de moyens de maintien radial de l'organe denté intermédiaire contre les organes dentés avant et arrière.

## Revendications

1. Ensemble de colonne de direction (1), du type comprenant un arbre de direction s'étendant suivant une direction longitudinale (X-X) et comprenant un tronçon avant (4) et un tronçon arrière (6), un mécanisme à engrenages (19) pour transmettre au tronçon avant (4) un mouvement de rotation du tronçon arrière (6) produit par un volant de direction (12), un bloc fixe (16) de montage d'un coussin central (64) pour le maintenir fixe en rotation lorsque l'arbre de direction tourne, le mécanisme à engrenages comprenant un organe denté avant (28) lié au tronçon avant (4) d'arbre de direction, un organe denté arrière (22) lié au tronçon arrière (6) d'arbre de direction, et un organe denté intermédiaire (24), dont une partie dentée avant (104) engrène avec l'organe denté avant et une partie dentée arrière (106) engrène avec l'organe denté arrière, **caractérisé en ce que** les dents (108) de la partie dentée avant (104) de l'organe denté intermédiaire (24) sont décalées angulairement par rapport aux dents (110) de sa partie dentée arrière (106).

2. Ensemble selon la revendication 1, **caractérisé en ce que** le plan radial médian (P) de chaque dent (108) de la partie dentée avant (104) est d'une part disposé en regard d'un espace (112) séparant deux dents (110) voisines de la partie dentée arrière (106), et d'autre part espacé angulairement sensiblement du même angle (α) par rapport aux plans radiaux médians (P) de ces deux dents (110) voisines.

3. Ensemble selon la revendication 2, **caractérisé en ce que** les parties dentées avant et arrière possèdent chacune le même nombre de dents espacées du même pas, et **en ce que** les dents (108) de la partie dentée avant (104) sont décalées d'un demi-pas par rapport aux dents (110) de la partie dentée arrière (106).

4. Ensemble selon l'une des revendications 1 à 3, **caractérisé en ce que** l'ensemble de colonne de direction comprend en outre des moyens (36, 52, 58) de maintien radial de l'organe denté intermédiaire (24) contre les dents des organes dentés avant et arrière (22, 28).

5. Ensemble selon la revendication 4, **caractérisé en ce que** les moyens de maintien comprennent un organe (58) de rappel élastique de l'organe denté intermédiaire (24) contre les organes dentés avant et arrière (20, 22).

6. Ensemble selon la revendication 5, **caractérisé en ce que** les moyens de maintien comprennent un mécanisme à surfaces de rampe (44, 46, 48, 50) pour transformer une composante longitudinale d'une force produite par l'organe (58) de rappel élastique en une force radiale de rappel de l'organe denté intermédiaire (24) contre les organes dentés avant (28) et arrière (22).

7. Ensemble selon l'une des revendications précédentes, **caractérisé en ce que** le mécanisme à surfaces de rampe comprend un support (36) de l'organe denté intermédiaire (24), lequel support (36) est reçu de manière mobile radialement par rapport au bloc fixe (16).

8. Ensemble selon l'une des revendications précédentes, **caractérisé en ce que** l'organe de rappel élastique est un ressort de compression (58) disposé longitudinalement.

9. Ensemble selon l'une des revendications précédentes, **caractérisé en ce que** les organes dentés avant et arrière sont des manchons (22, 28) dentés intérieurement, et **en ce que** l'organe denté intermédiaire est un pignon (24) denté extérieurement et disposé à l'intérieur des organes dentés avant et arrière.

10. Véhicule automobile, **caractérisé en ce qu'**il comprend un ensemble selon l'une des revendications précédentes.
